# EUROPEAN PATENT SPECIFICATION

(11) **EP 3 734 017 B1**
(45) Date of publication and mention of the grant of the patent: **18.12.2024**
(21) Application number: 20170918.5
(22) Date of filing: 22.04.2020
(51) Int. Cl.: F01D 9/04, F01D 25/24

(54) **GAS TURBINE ENGINE WITH FAN CASE HAVING INTEGRATED STATOR VANES**
GASTURBINENTRIEBWERK MIT FANGEHÄUSE MIT INTEGRIERTEN STATORLEITSCHAUFELN
MOTEUR À TURBINE À GAZ AVEC CARTER DE SOUFFLANTE DOTÉ D'AUBES DE STATOR INTÉGRÉES

(30) Priority: 03.05.2019 US 201916402331
(43) Date of publication of application: 04.11.2020
(73) Proprietor: RTX Corporation, Farmington, CT 06032 (US)
(72) Inventor: PAQUIN, Bradley L., Cheshire, CT Connecticut 06410 (US); SALISBURY, George Alan, East Hampton, CT Connecticut 06424 (US); RIEHL, John D., Hebron, CT Connecticut 06248 (US); BELL, Kevin M., Higganum, CT Connecticut 06441 (US)
(74) Representative: Dehns

(56) References cited:
- WO-A1-00/03136
- US-A1- 2013 108 432
- US-A1- 2013 153 456
- US-A1- 2016 245 103
- US-A1- 2019 085 790

## Description

### BACKGROUND

A gas turbine engine typically includes a fan section, a compressor section, a combustor section, and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Gas turbine engines are known to include fan cases, which surround one or more arrays of fan blades and stator vanes. Fan cases are typically cylindrically shaped, and are known to be made of temperature resistant materials such as metals or composites. An example of such a fan case is described in US 2013/108432 A1. This document describes an airflow-straightening structure for an aircraft engine which includes a hoop inside which there are arranged a plurality of flow-straightening vanes bearing a hub of a fan. The hoop and plurality of vanes are formed in one piece and at least partially formed of a composite material.

A further example is described in US 2013/153456 A1 which describes a containment case for a gas turbine engine. That case comprises a composite core with an inner and outer surface, and at least one puncture resistant layer bonded to the inner surface of the composite core and at least one energy capture layer bonded to the outer surface of the composite core. The puncture resistant layer has a high through-thickness shear strength and high interlaminar toughness at impact. The energy capture layer having a high in-plane tensile strength and low resistance to delamination and fiber-matrix debonding at impact. A method of fabricating a containment case is described which includes the steps of disposing one or more layers of a puncture resistant material on a layup mandrel, disposing one more layers of a structural composite material on an exterior surface of the puncture resistant material, disposing one or more layers of an energy capture material on an exterior surface of the structural material and curing a resin in the plurality of layers.

### SUMMARY

According to a first aspect of the present invention there is provided a gas turbine engine comprising, a fan case and a plurality of stator vanes integrally formed with the fan case, and the fan case is configured to radially surround fan blades of the gas turbine engine. The fan case and stator vanes are integrally molded of a composite material, the composite material is a polymer matrix composite material, and the polymer matrix composite material comprises reinforcing fibers bound together by a polymer matrix.

In an embodiment of the above embodiment, the plurality of stator vanes includes an array of stator vanes.

In an embodiment of any of the above embodiments, each stator vane in the array projects radially inward from the case.

In an embodiment of any of the above embodiments, the engine includes an inner platform, and each stator vane in the array projects radially inward from the case to the inner platform.

In an embodiment of any of the above embodiments, the inner platform is integrally formed with each of the stator vanes in the array.

In an embodiment of any of the above embodiments, the fan case and stator vanes are formed using a resin transfer molding process.

In an embodiment of any of the above embodiments, the polymer matrix is provided by a polyimide material.

In an embodiment of any of the above embodiments, the polymer matrix is provided by a bismaleimide (BMI) material.

In an embodiment of any of the above embodiments, the reinforcing fibers comprise one of carbon fibers, aramid fibers, glass fibers, and ceramic fibers.

In an embodiment of any of the above embodiments, the plurality of stator vanes comprises a first array of stator vanes and a second array of stator vanes axially spaced-apart from the first array of stator vanes.

In an embodiment of any of the above embodiments, the fan case includes a fore section integrally formed with the first array of stator vanes and an aft section integrally formed with the second array of stator vanes.

In an embodiment the reinforcing fibers are arranged differently in the fan case and the stator vanes. In an embodiment of the previous embodiment the fan case includes a plurality of first fibers extending in a direction parallel to the engine central longitudinal axis and a plurality of second fibers interwoven with the first fibers and extending circumferentially about the engine central longitudinal axis.

A method according to a second aspect of the present invention comprising,
inserting a reinforcement structure into a mold cavity, and injecting a polymer resin into the mold cavity to integrally form a fan case of a gas turbine engine with a plurality of stator vanes, and allowing the polymer resin and reinforcement structure to cool such that the polymer resin and the reinforcement structure form a polymer matrix composite (PMC) material comprising reinforcing fibers bound together by a polymer matrix.

In an embodiment of the above embodiment, the polymer resin is one of polyimide and bismaleimide (BMI).

In an embodiment of any of the above embodiments, the reinforcement structure comprises one of carbon fibers, aramid fibers, glass fibers, and ceramic fibers.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 schematically illustrates a gas turbine engine.
Figure 2 is a perspective view of an embodiment of an engine component according to the present invention.
Figure 3 is a front view of the example engine component of Figure 2.
Figure 4 is close-up view of the example engine component of Figure 2, and in particular illustrates the intersection of the stator vanes and the fan case.
Figure 5 schematically illustrates another embodiment of an engine component according to the present invention.

### DETAILED DESCRIPTION

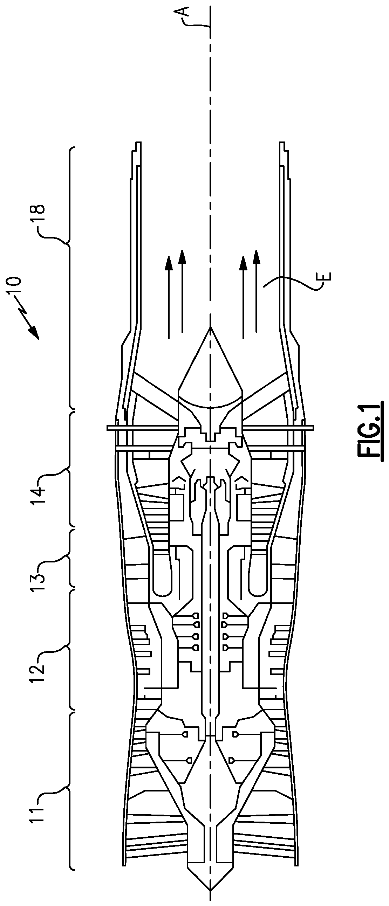

Referring to Figure 1, a gas turbine engine 10 includes a fan section 11, a compressor section 12, a combustor section 13, and a turbine section 14. Air entering into the fan section 11 is initially compressed and fed to the compressor section 12. In the compressor section 12, the incoming air from the fan section 11 is further compressed and communicated to the combustor section 13. In the combustor section 13, the compressed air is mixed with gas and ignited to generate a hot exhaust stream E. The hot exhaust stream E is expanded through the turbine section 14 to drive the fan section 11 and the compressor section 12. The exhaust gasses E flow from the turbine section 14 through an exhaust liner assembly 18. Although a specific engine is depicted in Figure 1, it should be understood that the concepts described may be applied to other types of turbine engines.

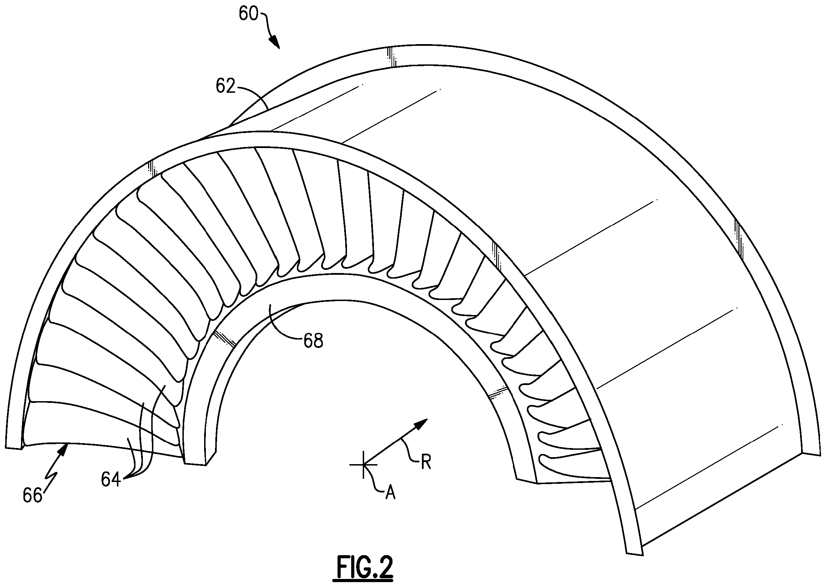

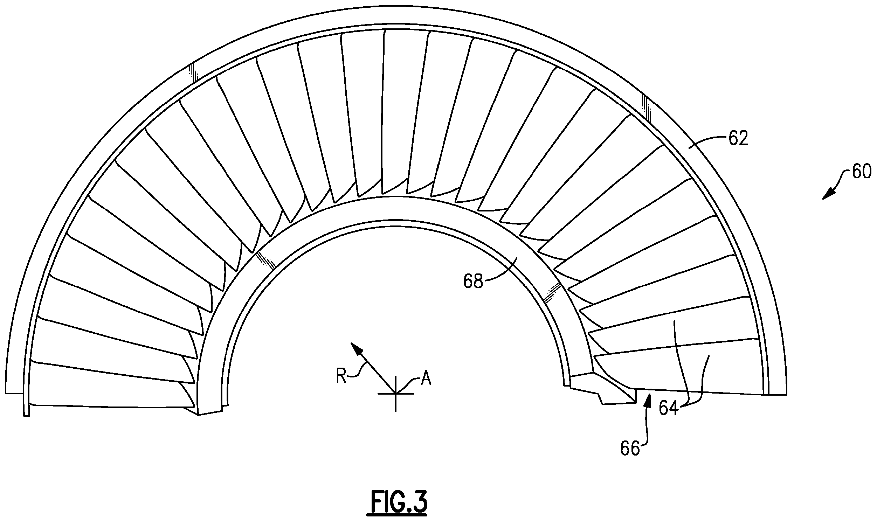

Figure 2 illustrates an engine component 60 according to this disclosure from a perspective view, and Figure 3 illustrates the engine component 60 from a front view. With joint reference to Figures 2 and 3, the engine component 60 is a fan case 62 and provides a portion of the fan section 11 of the engine 10. In this disclosure, a plurality of stator vanes 64 are integrally formed with the fan case 62. In Figures 2 and 3, a first array 66 of stator vanes 64 is shown, and each of the stator vanes 64 is integrally formed with the fan case 62.

In Figures 2 and 3, the fan case 62 extends approximately 180° about the engine central longitudinal axis A. Specifically, the engine component 60 provides about half of the fan case 62 and first array 66, and the engine 10 includes a similar engine component which is arranged relative to the engine component 60 and completes the fan case 62 and the first array 66. In another embodiment the fan case 62 forms a complete circumferential hoop about the engine central longitudinal axis A and provides an entire fan case. In this other embodiment, the first array 66 of stator vanes 64 also extends about the entirety of the engine central longitudinal axis A.

While only one array of stator vanes is shown in Figures 2 and 3, there could be a second array of stator vanes integrally formed with the fan case 62 and axially spaced-apart from the first array 66. As is known, arrays of fan blades or other rotatable blades are configured to rotate about the engine central longitudinal axis A within the fan case 62 and adjacent the array(s) of stator vanes 64.

Again, in this disclosure, the fan case 62 is integrally formed with the stator vanes 64. Integrally formed means that the components are formed into one piece. In particular, the components that are referred to herein as integrally formed are formed together as part of the same manufacturing process and, when formed, provide a unitary structure without any joints or seams. Integrally forming the engine component 60 provides a number of benefits, including reducing weight of the engine 10, and reducing the number of component parts. Additional benefits will be appreciated from the below.

In a particular aspect of this disclosure, not only are the fan case 62 and stator vanes 64 integrally formed, but the engine component 60 also includes an inner platform 68 which is also integrally formed with each of the stator vanes 64. In particular, each stator vane 64 projects radially inward, relative to the radial direction R, which is normal to the engine central longitudinal axis A and labeled in the figures for reference, from the fan case 62 to the inner platform 68. The platform 68 is configured to connect to a structure of the engine 10, as is known in the art.

In this disclosure, the engine component 60 (i.e., the fan case 62, stator vanes 64, and inner platform 68) is integrally formed of a composite material. According to the invention, the engine component 60 is integrally formed of a polymer matrix composite (PMC) material including reinforcing fibers bound together by a polymer matrix. A polymer matrix composite (PMC) is a composite material composed of a variety of short or continuous fibers bound together by an organic polymer matrix. PMCs are designed to transfer loads between fibers through the matrix. PMCs are lightweight, exhibit high stiffness, and exhibit high strength along the direction of the reinforcing fibers. Other advantages are good abrasion resistance and good corrosion resistance.

The PMC material provides weight and cost benefits, and the fan case 62 may also exhibit enhanced containment capabilities relative to prior designs, in particular in the event of a blade out condition wherein the fan case 62 is relied upon to prevent a blade or fragments of a blade from being expelled outside the engine 10.

Example PMC materials which may be used to form the engine component 60 will now be described. In one example, the engine component 60 may be formed of a reinforcing structure bound together by polyimide or bismaleimide (BMI), both of which are polymer materials with high temperature resistance capabilities and which may provide enhanced containment capabilities. The reinforcing structure can be any known type of fiber material, including carbon fibers, aramid fibers, ceramic fibers, and glass fibers, as examples.

Polyimides are polymers of imide monomers. Polyimides exhibit high temperature resistance and also exhibit high strength and rigidity at elevated temperatures. One known type of polyimide is AFR-PE-4 made commercially available by Renegade Materials. BMIs are high performance thermosetting addition-type polyimides. Their characteristics are similar to those of polyimides, which exhibit high strength and high temperature resistance. One known BMI is CYCOM 5250-4 manufactured by Solvay.

The engine component 60 is manufactured by a resin transfer molding process in one example. In that example, the engine component 60 is formed first by inserting the reinforcing structure (i.e., the carbon, aramid, ceramic, or glass fibers) into a mold cavity, and then injecting polymer resin into the mold cavity. Again, the polymer resin is one of polyimide and bismaleimide (BMI). Following injection, the part is allowed to cool, and then it is removed from the mold.

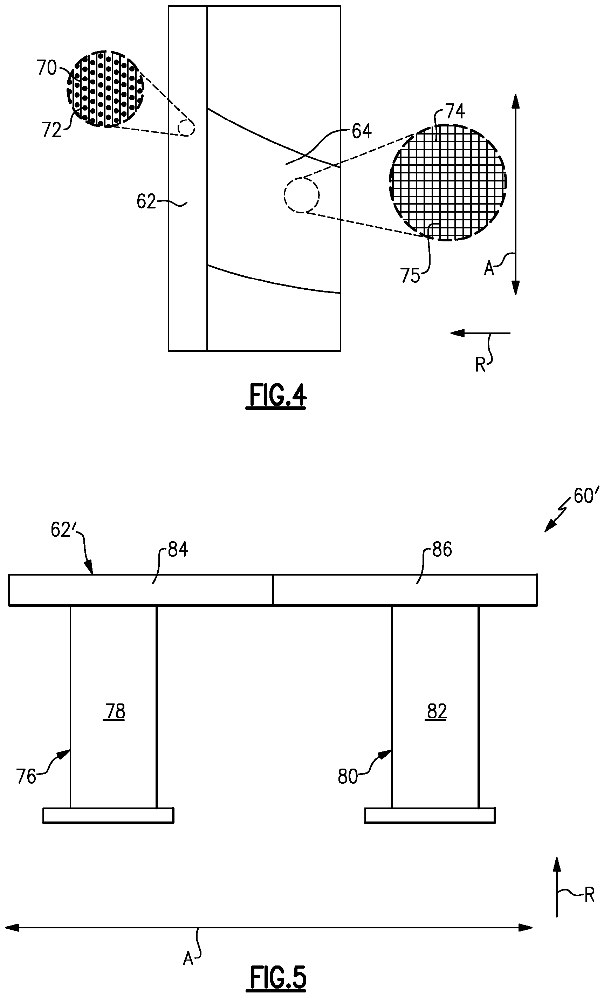

In one example, the reinforcement structure is arranged differently in the fan case 62 and the stator vanes 64. In particular, relative to Figure 4, the fan case 62 includes a plurality of first fibers 70 extending in a direction parallel to the engine central longitudinal axis A and a plurality of second fibers 72 interwoven with the first fibers 70 and extending circumferentially about the engine central longitudinal axis A, which is represented as in-and-out of the page relative to Figure 4. This arrangement of fibers, which may be braided and/or 3D-woven, relative to the fan case 62 provides enhanced containment capabilities. To this end, the fan case fiber arrangement shown in Figure 4 may be limited to areas in the engine 10 where containment is needed. Relative to the stator vanes 64, the reinforcement structure includes a plurality of first fibers 74 extending in a direction parallel to radial direction R and a plurality of second fibers 75 interwoven with the first fibers 74 and extending in a direction parallel to the engine central longitudinal axis A. This fiber arrangement relative to the stator vanes 64 provides for optimum vane performance.

Figure 5 schematically illustrates another engine component 60' according to this disclosure. In Figure 5, the fan case 62' includes a first array 76 of stator vanes 78 and a second array 80 of stator vanes 82 axially spaced-apart from the first array 76 along the engine central longitudinal axis. In this example, the fan case 62' includes two sections, namely a fore section 84 and an aft section 86. The fore section 84 is integrally formed with the first array 76 of stator vanes 78, and the aft section 86 is integrally formed with the second array 80 of stator vanes 82. The fore section 84 is made of a polymer matrix composite including reinforcing fibers held together by a matrix provided by a bismaleimide (BMI) material, in one example. In this example, the aft section 86 is made of another material, which may be of higher temperature capability and greater cost, as examples, than the material forming the fore section 84. The arrangement of Figure 5 provides the fore section 84 with enhanced containment capabilities, high temperature resistance, and high strength, while saving on cost. While the fan case 62' in Figure 5 is not a unitary, seamless structure, it still reduces the number of component parts relative to traditional designs, and provides enhanced material properties in the fore section 84, which is the section most likely to need such enhanced properties in some scenarios.

It should be understood that terms such as "fore," "aft," "axial," "radial," and "circumferential" are used above with reference to the normal operational attitude of the engine 10. Further, these terms have been used herein for purposes of explanation, and should not be considered otherwise limiting. Terms such as "generally," "substantially," and "about" are not intended to be boundaryless terms, and should be interpreted consistent with the way one skilled in the art would interpret those terms.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A gas turbine engine (10), comprising:
a fan case (62); and
a plurality of stator vanes (64) integrally formed with the fan case (62), and the fan case (62) is configured to radially surround fan blades of the gas turbine engine (10), **characterised in that** the fan case (62) and stator vanes (64) are integrally molded of a composite material, the composite material is a polymer matrix composite material, and the polymer matrix composite material comprises reinforcing fibers bound together by a polymer matrix.

2. The gas turbine engine as recited in claim 1, wherein the plurality of stator vanes (64) includes an array (66) of stator vanes (64).

3. The gas turbine engine as recited in claim 2, wherein each stator vane (64) in the array (66) projects radially inward from the case (62).

4. The gas turbine engine as recited in claim 2 or 3, further comprising an inner platform (68), wherein each stator vane (64) in the array (66) projects radially inward from the case (62) to the inner platform (68) and optionally the inner platform (68) is integrally formed with each of the stator vanes (64) in the array (66).

5. The gas turbine engine as recited in claim 1, wherein the plurality of stator vanes (64) includes a first array (76) of stator vanes (78) and a second array (80) of stator vanes (82) axially spaced-apart from the first array (76) of stator vanes (78).

6. The gas turbine engine as recited in claim 5, wherein the fan case (62') includes a fore section (84) integrally formed with the first array (76) of stator vanes (78) and an aft section (86) integrally formed with the second array (80) of stator vanes (82).

7. The gas turbine engine as recited in any of claims 1 to 6, wherein the fan case (62) and stator vanes (64) are formed using a resin transfer molding process.

8. The gas turbine engine as recited in any of claims 1 to 7, wherein the polymer matrix is provided by one of a polyimide material, and bismaleimide (BMI) material.

9. The gas turbine engine as recited in any of claims 1 to 7, wherein the reinforcing fibers comprises one of carbon fibers, aramid fibers, glass fibers, and ceramic fibers.

10. The gas turbine engine as recited in claim 1, wherein the reinforcing fibers (70) are arranged differently in the fan case 62 and the stator vanes 64.

11. The gas turbine engine as recited in claim 10, wherein the fan case 62 includes a plurality of first fibers 70 extending in a direction parallel to the engine central longitudinal axis A and a plurality of second fibers 72 interwoven with the first fibers 70 and extending circumferentially about the engine central longitudinal axis A,

12. A method, comprising:
inserting a reinforcement structure into a mold cavity; and the method is **characterized by**
injecting a polymer resin into the mold cavity to integrally form a fan case of a gas turbine engine integrally formed with a plurality of stator vanes, and allowing the polymer resin and reinforcement structure to cool such that the polymer resin and the reinforcement structure form a polymer matrix composite (PMC) material comprising reinforcing fibers bound together by a polymer matrix.

13. The method as recited in claim 12, wherein the polymer resin is one of polyimide and bismaleimide (BMI).

14. The method as recited in claim 12 or 13,
wherein the reinforcement structure includes one of carbon fibers, aramid fibers, glass fibers, and ceramic fibers.

## Patentansprüche

1. Gasturbinentriebwerk (10), umfassend:
ein Fangehäuse (62); und
eine Vielzahl von Statorleitschaufeln (64), die einstückig mit dem Fangehäuse (62) gebildet ist, und wobei das Fangehäuse (62) dazu konfiguriert ist, Fanlaufschaufeln des Gasturbinentriebwerks (10) radial zu umgeben, **dadurch gekennzeichnet, dass** das Fangehäuse (62) und die Statorleitschaufeln (64) einstückig aus einem Verbundmaterial geformt sind, das Verbundmaterial ein Polymermatrixverbundmaterial ist und das Polymermatrixverbundmaterial Verstärkungsfasern umfasst, die durch eine Polymermatrix zusammengehalten werden.

2. Gasturbinentriebwerk nach Anspruch 1, wobei die Vielzahl von Statorleitschaufeln (64) ein Array (66) aus Statorleitschaufeln (64) beinhaltet.

3. Gasturbinentriebwerk nach Anspruch 2, wobei jede Statorleitschaufel (64) in dem Array (66) aus dem Gehäuse (62) radial nach innen vorsteht.

4. Gasturbinentriebwerk nach Anspruch 2 oder 3, ferner umfassend eine innere Plattform (68), wobei jede Statorleitschaufel (64) in dem Array (66) von dem Gehäuse (62) radial nach innen zu der inneren Plattform (68) vorsteht und optional die innere Plattform (68) einstückig mit jeder der Statorleitschaufeln (64) in dem Array (66) gebildet ist.

5. Gasturbinentriebwerk nach Anspruch 1, wobei die Vielzahl von Statorleitschaufeln (64) ein erstes Array (76) aus Statorleitschaufeln (78) und ein zweites Array (80) aus Statorleitschaufeln (82), das axial von dem ersten Array (76) aus Statorleitschaufeln (78) beabstandet ist, beinhaltet.

6. Gasturbinentriebwerk nach Anspruch 5, wobei das Fangehäuse (62') einen vorderen Abschnitt (84), der einstückig mit dem ersten Array (76) aus Statorleitschaufeln (78) gebildet ist, und einen hinteren Abschnitt (86), der einstückig mit dem zweiten Array (80) aus Statorleitschaufeln (82) gebildet ist, beinhaltet.

7. Gasturbinentriebwerk nach einem der Ansprüche 1 bis 6, wobei das Fangehäuse (62) und die Statorleitschaufeln (64) unter Verwendung eines RTM-Verfahrens gebildet sind.

8. Gasturbinentriebwerk nach einem der Ansprüche 1 bis 7, wobei die Polymermatrix durch eines von einem Polyimidmaterial oder einem Bismaleimidmaterial (BMI-Material) bereitgestellt ist.

9. Gasturbinentriebwerk nach einem der Ansprüche 1 bis 7, wobei die Verstärkungsfasern eines von Kohlenstofffasern, Aramidfasern, Glasfasern oder Keramikfasern umfassen.

10. Gasturbinentriebwerk nach Anspruch 1, wobei die Verstärkungsfasern (70) in dem Fangehäuse 62 und den Statorleitschaufeln 64 unterschiedlich angeordnet sind.

11. Gasturbinentriebwerk nach Anspruch 10, wobei das Fangehäuse 62 eine Vielzahl von ersten Fasern 70, die sich in einer Richtung parallel zur zentralen Längsachse A des Triebwerks erstreckt, und eine Vielzahl von zweiten Fasern 72, die mit den ersten Fasern 70 verwoben ist und sich umlaufend um die zentrale Längsachse A des Triebwerks erstreckt, beinhaltet.

12. Verfahren, umfassend:
Einfügen einer Verstärkungsstruktur in einen Formhohlraum; und
wobei das Verfahren **gekennzeichnet ist durch**
Einspritzen eines Polymerharzes in den Formhohlraum, um einstückig ein Fangehäuse eines Gasturbinentriebwerks zu bilden, das einstückig mit einer Vielzahl von Statorleitschaufeln gebildet ist, und Abkühlenlassen des Polymerharzes und der Verstärkungsstruktur, sodass das Polymerharz und die Verstärkungsstruktur ein Polymermatrixverbundmaterial (PMC-Material) bilden, das Verstärkungsfasern umfasst, die durch eine Polymermatrix zusammengehalten werden.

13. Verfahren nach Anspruch 12, wobei das Polymerharz eines von Polyimid oder Bismaleimid (BMI) ist.

14. Verfahren nach Anspruch 12 oder 13, wobei die Verstärkungsstruktur eines von Kohlenstofffasern, Aramidfasern, Glasfasern oder Keramikfasern beinhaltet.

## Revendications

1. Moteur à turbine à gaz (10), comprenant :
un carter de soufflante (62) ; et
une pluralité d'aubes de stator (64) formées d'un seul tenant avec le carter de soufflante (62), et le carter de soufflante (62) est configuré pour entourer radialement des pales de soufflante du moteur à turbine à gaz (10), **caractérisé en ce que** le carter de soufflante (62) et les aubes de stator (64) sont intégralement moulés à partir d'un matériau composite, le matériau composite est un matériau composite à matrice polymère, et le matériau composite à matrice polymère comprend des fibres de renforcement liées entre elles par une matrice polymère.

2. Moteur à turbine à gaz selon la revendication 1, dans lequel la pluralité d'aubes de stator (64) comportent un réseau (66) d'aubes de stator (64).

3. Moteur à turbine à gaz selon la revendication 2, dans lequel chaque aube de stator (64) dans le réseau (66) fait saillie radialement vers l'intérieur à partir du carter (62).

4. Moteur à turbine à gaz selon la revendication 2 ou 3, comprenant également une plate-forme interne (68), dans lequel chaque aube de stator (64) dans le réseau (66) fait saillie radialement vers l'intérieur du carter (62) à la plate-forme interne (68) et éventuellement, la plate-forme interne (68) est formée d'un seul tenant avec chacune des aubes de stator (64) dans le réseau (66).

5. Moteur à turbine à gaz selon la revendication 1, dans lequel la pluralité d'aubes de stator (64) comportent un premier réseau (76) d'aubes de stator (78) et un second réseau (80) d'aubes de stator (82) espacées axialement du premier réseau (76) d'aubes de stator (78).

6. Moteur à turbine à gaz selon la revendication 5, dans lequel le carter de soufflante (62') comporte une section avant (84) formée d'un seul tenant avec le premier réseau (76) d'aubes de stator (78) et une section arrière (86) formée d'un seul tenant avec le second réseau (80) d'aubes de stator (82).

7. Moteur à turbine à gaz selon l'une quelconque des revendications 1 à 6, dans lequel le carter de soufflante (62) et les aubes de stator (64) sont formés en utilisant un processus de moulage par transfert de résine.

8. Moteur à turbine à gaz selon l'une quelconque des revendications 1 à 7, dans lequel la matrice polymère est constituée de l'un d'un matériau polyimide et d'un matériau bismaléimide (BMI).

9. Moteur à turbine à gaz selon l'une quelconque des revendications 1 à 7, dans lequel les fibres de renforcement comprennent l'une de fibres de carbone, de fibres d'aramide, de fibres de verre et de fibres de céramique.

10. Moteur à turbine à gaz selon la revendication 1, dans lequel les fibres de renforcement (70) sont disposées différemment dans le carter de soufflante (62) et les aubes de stator (64).

11. Moteur à turbine à gaz selon la revendication 10, dans lequel le carter de soufflante (62) comporte une pluralité de premières fibres (70) se prolongeant dans une direction parallèle à l'axe longitudinal central de moteur A et une pluralité de secondes fibres (72) entrelacées avec les premières fibres (70) et se prolongeant de manière circonférentielle autour de l'axe longitudinal central de moteur A.

12. Procédé, comprenant :
l'insertion d'une structure de renforcement dans une cavité de moule ; et le procédé est **caractérisé par**
l'injection d'une résine polymère dans la cavité de moule pour former d'un seul tenant un carter de soufflante d'un moteur à turbine à gaz formé d'un seul tenant avec une pluralité d'aubes de stator, et le fait de laisser la résine polymère et la structure de renforcement refroidir de sorte que la résine polymère et la structure de renforcement forment un matériau composite à matrice polymère (PMC) comprenant des fibres de renforcement liées entre elles par une matrice polymère.

13. Procédé selon la revendication 12, dans lequel la résine polymère est l'un d'un polyimide et d'un bismaléimide (BMI).

14. Procédé selon la revendication 12 ou 13, dans lequel la structure de renforcement comporte l'une de fibres de carbone, de fibres d'aramide, de fibres de verre et de fibres de céramique.
